(19) Europäisches Patentamt
European Patent Office
Office européen des brevets

(11) **EP 2 858 034 A1**

(12) **EUROPEAN PATENT APPLICATION**

(43) Date of publication:
08.04.2015 Bulletin 2015/15

(51) Int Cl.:
*G06T 5/00* (2006.01)  *G06T 7/00* (2006.01)

(21) Application number: 14185806.8

(22) Date of filing: 22.09.2014

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 02.10.2013 EP 13306367

(71) Applicant: **Thomson Licensing**
**92130 Issy-les-Moulineaux (FR)**

(72) Inventors:
• **Putzke-Roeming, Wolfram**
**31137 Hildesheim (DE)**
• **Gandolph, Dirk**
**30952 Ronnenberg (DE)**
• **Jachalsky, Joern**
**30974 Wennigsen (DE)**

(74) Representative: **Schmidt-Uhlig, Thomas**
**Deutsche Thomson OHG**
**European Patent Operations**
**Karl-Wiechert-Allee 74**
**30625 Hannover (DE)**

(54) **Method and apparatus for generating temporally consistent depth maps**

(57)    A method and an apparatus (20) for generating temporally consistent depth maps (4) for an image are described. A first retrieving unit (23) retrieves (10) a representation (1) of an image from the sequence of images by segmentation regions resulting from a temporally consistent over-segmentation. In addition, a second retrieving unit (24) retrieves (11) a depth map (3) associated to the image. A projecting unit (25) then projects (12) the segmentation regions of the image into the depth map (3) associated to the image. Finally, a modifying unit (26) modifies (13) depth values of the depth map (3) within one or more of the projected segmentation regions.

Fig. 3

EP 2 858 034 A1

**Description**

**FIELD OF THE INVENTION**

The invention relates to a method and an apparatus for generating depth maps for a sequence of images, and more specifically to a method and an apparatus for generating depth maps for a sequence of images, which are temporally consistent.

**BACKGROUND OF THE INVENTION**

Today there is a trend to create and deliver richer media experiences to consumers. In order to go beyond the ability of either sample based (video) or model-based (CGI) methods novel representations for digital media are required. One such media representation is SCENE media representation (http://3d-scene.eu). Therefore, tools need to be developed for the generation of such media representations, which provide the capturing of 3D video being seamlessly combined with CGI.

The SCENE media representation will allow the manipulation and delivery of SCENE media to either 2D or 3D platforms, in either linear or interactive form, by enhancing the whole chain of multidimensional media production. Special focus is on spatiotemporal consistent scene representations. The project also evaluates the possibilities for standardizing a SCENE Representation Architecture (SRA).

In the SCENE project a professional video camera is developed, which integrates a time of flight camera to generate depth maps. Since the time of flight camera uses the same optics as the video camera, both cameras record material from the same perspective. As a consequence, the registration of video material and depth maps is much simpler as depth pixel and color pixel are consistent.

Some approaches to improve the quality of depth or disparity maps employ an over-segmentation of the video frames, making the assumption that depth or disparity values within one segment are similar. If this assumption holds, missing depth or disparity values are generated by "extrapolation" of the good values from the same segment.

European Patent Application EP 13171832.2 describes a method for temporally consistent video over-segmentation with superpixels. A superpixel can be considered as a cluster of adjacent image pixels, which share a set of common properties, e.g. color. The generation of superpixels can be conceived as a clustering problem, as described, for example, in R. Achanta et al.: "SLIC Superpixels Compared to State-of-the-Art Superpixel Methods", IEEE Transactions on Pattern Analysis and Machine Intelligence, Vol. 43 (2012), pp. 2274-2282.

It would be desirable to achieve comparable consistency also for depth maps associated to a sequence of images.

**SUMMARY OF THE INVENTION**

It is thus an object of the present invention to propose a solution for generating temporally consistent depth maps for a sequence of images.

According to the invention, a method generating temporally consistent depth maps for a sequence of images for generating temporally consistent depth maps for a sequence of images comprises:

- retrieving a representation of an image from the sequence of images by segmentation regions resulting from a temporally consistent over-segmentation;
- retrieving a depth map associated to the image;
- projecting the segmentation regions of the image into the depth map associated to the image; and
- modifying depth values of the depth map within one or more of the projected segmentation regions.

Accordingly, an apparatus configured to generate temporally consistent depth maps for a sequence of images comprises:

- a first retrieving unit configured to retrieve a representation of an image from the sequence of images by segmentation regions resulting from a temporally consistent over-segmentation;
- a second retrieving unit configured to retrieve a depth map associated to the image;
- a projecting unit configured to project the segmentation regions of the image into the depth map associated to the image; and
- a modifying unit configured to modify depth values of the depth map within one or more of the projected segmentation regions.

Similarly, a computer readable storage medium has stored therein instructions enabling generating temporally consistent depth maps for a sequence of images, which when executed by a computer, cause the computer to:

- retrieve a representation of an image from the sequence of images by segmentation regions resulting from a temporally consistent over-segmentation;
- retrieve a depth map associated to the image;
- project the segmentation regions of the image into the depth map associated to the image; and
- modify depth values of the depth map within one or more of the projected segmentation regions.

According to the invention three different types of input data are combined to generate temporally consistent depth maps. The first input data are video frames, for which a representation by segmentation regions resulting from a temporally consistent over-segmentation is available. An example of such segmentations regions are superpixels. The second input data are depth map frames. The solution assumes that there is a function F, which assigns every pixel of a video frame to one pixel in the related depth map. By means of this function the segmentation regions resulting from the temporally consistent over-segmentation for a video frame are projected easily onto the related depth map. Once this projection is complete, depth values of the depth map are modified within one or more of the projected segmentation regions.

The proposed solution has the advantage that temporally consistent and more reliable depth maps are generated for video material for which a temporally consistent over-segmentation is available. As real-time implementations are available for temporally consistent over-segmentation, the solution can be easily be incorporated into workflows requiring real-time processing.

Advantageously, the depth values are modified by fitting a regression plane to a projected segmentation region and replacing one or more depth values in the projected segmentation region with depth values represented by the regression plane. The regression plane is, for example, fitted to the projected segmentation region using a random sample consensus algorithm. The use of regression planes allows removing outliers, e.g. noise, very easily.

Advantageously, only those depth values are modified in the projected segmentation region, whose distance to the regression plane is larger than a threshold. This ensures that the depth information in the depth map is not modified more than necessary, i.e. that the details in the depth map are maintained.

Preferably, the quality of a potential regression plane is controlled by a first parameter defining a maximum allowed distance of a depth value from the plane to be considered located in the plane and a second parameter defining the minimal percentage of depth values of the projected segmentation region that are located in the plane or within the allowed distance from the plane. These quality criteria allow easily determining a group of good matching regression planes, among which the best matching plane is later determined.

Favorably, a missing regression plane for a projected segmentation region of the image is interpolated from corresponding regression planes of temporally adjacent images. For this purpose motion data for the segmentation region is preferably taken into account, like the average motion vector. This data is computed during the temporally consistent over-segmentation. The interpolation is useful in case for a certain segmentation region in a frame no plane can be determined, which fulfills the above quality criteria.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims.

**BRIEF DESCRIPTION OF THE DRAWINGS**

Fig. 1    depicts a block diagram describing the dataflow in the proposed solution,

Fig. 2    describes a geometrical method using normal vectors for determining a missing regression plane,

Fig. 3    schematically shows a method according to the invention for generating temporally consistent depth maps, and

Fig. 4    illustrates an apparatus adapted to implement a solution according to the invention for generating temporally consistent depth maps.

**DETAILED DESCRIPTION OF PREFERED EMBODIMENTS**

In the following the proposed solution shall be explained for a temporally consistent superpixel over-segmentation. Of course, the solution works with any temporally consistent over-segmentation approach. Temporally consistent superpixels are only one example. In addition, it is assumed that depth values, which belong to the same superpixel, can be approximated by a plane in the three dimensional space. In other words, the superpixels are assumed to represent an over-segmentation of a real object.

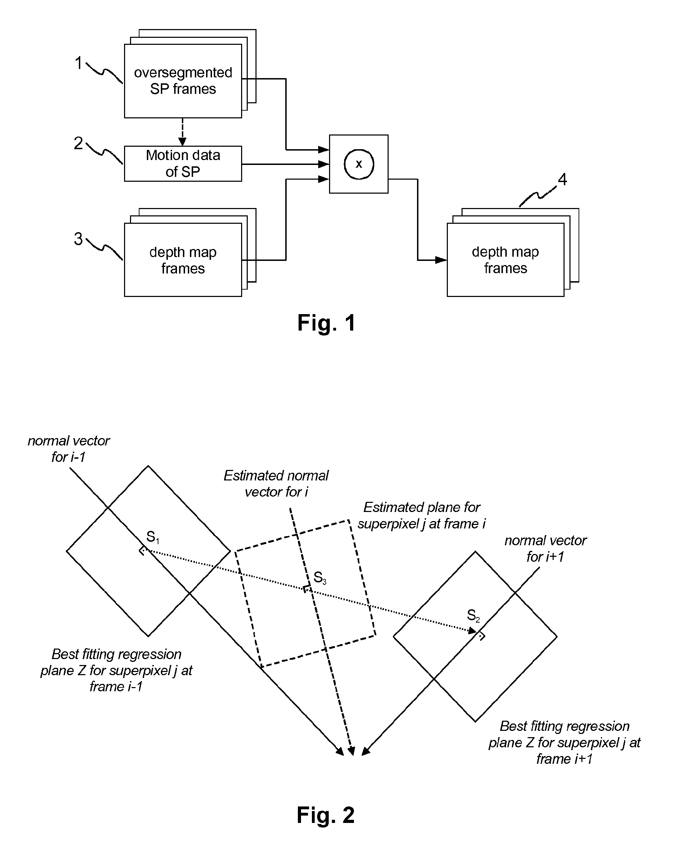

Fig. 1 depicts a block diagram describing the dataflow in the proposed solution. Inputs of the dataflow are video frames 1, for which a representation by temporally consistent superpixels is available. The set of superpixels for video frame $i$ is $S_i \overset{\text{def}}{=} \{S_{i,1}, \dots S_{i,n}\}$. In addition, motion data 2 for every superpixel are advantageously provided, e.g. the average motion vector. This data is preferably computed during the temporally consistent over-segmentation. A further input are depth maps 3, which fulfill two conditions. Firstly, there is a unique relation between the video frames 1 and the depth maps 3, e.g. a 1:1 relation. Secondly, a function $F$ exists, which assigns every pixel of a video frame 1 to one pixel in the related depth map 3. This function compensates for potential differences in size and perspective of video frames 1 and depth maps 3. For the mentioned SCENE camera this function is quite simple, since video frames 1 and depth maps 3 are recorded with the same perspective. In this case the function $F$ needs to compensate only for the different resolutions.

By means of the function $F$ the superpixel segmentation for video frame **i** can be projected easily onto the related depth map 3. Thus, the function $F(S_{i,j})$ determines the pixels in the depth map 3 which belong to the *superpixel j* in the video frame *i.*

Now, regression planes are determined for every projected superpixel in the depth map 3. Every plane can be defined by the selection of three points of the superpixel in the depth map 3. The only condition is that the direction vectors of the selected points are linearly independent. The quality of a regression plane *Z* is defined by the percentage of points of the superpixel in the depth map 3, which lie directly on the plane *Z* or have a deviation which is smaller than a certain threshold. Thus, the quality of good matching planes is controlled by two parameters. Firstly, the parameter *d,* which defines a maximum allowed deviation, i.e. distance, of a point from a plane. All points with a distance that is smaller than *d,* are considered to be in the plane. Secondly, the parameter *l* is the minimal percentage of points of $F(S_{i,j})$, which lie directly on *Z* or have a maximal distance *d* from the plane *Z.*

Then, using a RANSAC algorithm (RANSAC: RANdom SAmple Consensus) for every projected superpixel *j* in the depth map 3 of frame *i* the best fitting regression plane *Z* is determined out of the set of "good matching" planes. Further explanations on how to determine the best fitting plane *Z* for a superpixel in the depth map 3 utilizing the temporal consistency of superpixels will be given further below. Of course, the RANSAC algorithm is only one possible solution for finding the best fitting regression plane *Z.* Other mathematical ways to construct and interpolate regression planes are well known to the skilled person.

In a next step all depth values belonging to $F(S_{i,j})$, which have a distance to *Z* that is greater than a certain threshold *t,* will be replaced by the values represented by *Z* at the respective positions in order to generate the temporally consistent depth map 4. It is assumed that such values are outliers or noise in the depth map 3. Thus, the improvement of this step is threefold. Firstly, outliers will be removed. Secondly, temporally consistent over-segmentation in the image and in the depth map 4 becomes consistent. And thirdly, the temporal consistency of the superpixels in the depth map 4 is improved. As will be explained further below, the temporal consistency can be further improved if the determination of the best matching regression plane *Z* also takes the past and the future of a superpixel into account.

Basically two cases have to be distinguished for the calculation of the plane *Z.* If the superpixel *j* is marked as a static superpixel during the temporally consistent over-segmentation, i.e. if the superpixel *j* is marked as a superpixel without motion, the calculation of the best fitting plane *Z* can advantageously consider also the superpixel *j* in the previous and following frames $F(S_{t,j})$ with *t* = {*i - n, ..., i, ..., i + m*}, as long as *j* remains static in these frames. So the set of supporting points for the regression plane can be extended, which allows a more robust estimation of the plane in temporal direction. If, however, the superpixel *j* is not marked static, only the supporting points which are defined by $F(S_{i,j})$ are used.

It may happen that for a certain superpixel *j* in frame *i* no plane can be determined, which fulfills the requested quality criteria. In this case a plane might be interpolated, if planes for this superpixel *j* exist in the past and future frames. If at frame *i-n* (past) and *i+m* (future) a plane can be determined with the method above, the missing planes (between *i- n* and *i+ m*) can be approximated with different mathematical methods. In the following a geometrical method using normal vectors is described, with reference to Fig. 2.

It is assumed that for frame *i* - 1 (past) and *i + *1 (future) an optimal fitting regression plan *Z* can be determined with the method described above. Depending on the chosen mathematical method to define the plane the normal vector of the plane is known or can be determined easily. A special normal vector is the one through the origin. The intersections of these normal vectors through the origin with the planes at times *i* - 1 and *i* + 1 are $S_1$ and $S_2$.

The plane for frame *i* can now be interpolated by the computation of $S_3$. In this case $S_3$ is defined by $S_3$ . The position vector to $S_3$ can be considered as normal vector for the plane at frame *i*. Of course, this method can also be used to interpolate *k* planes. In this case the intersection points $S_k$ for the normal vectors are defined

as $\dfrac{l}{k+1}\left(S_1 + S_2\right)$ with *l*= {1,...,*k*}.

Without loss of generality, in the previous example a linear interpolation of the planes is assumed, as apparent from the factor $\dfrac{l}{k+1}$, since the temporal distance between consecutive frames is assumed to be constant.

If also in past and future frames no good matching plane could be found, the depth values of the related superpixel cannot be improved.

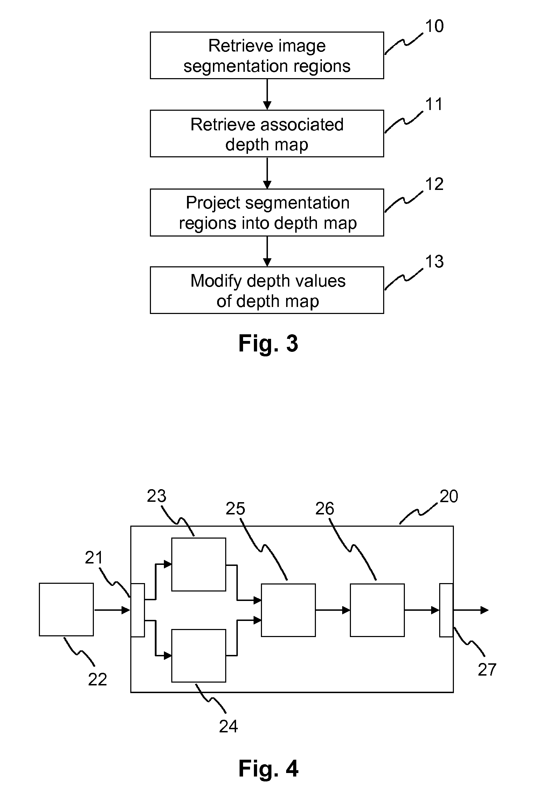

A method according to the invention for generating temporally consistent depth maps 4 for a sequence of images is schematically shown in Fig. 3. In a first step a representation 1 of an image from the sequence of images by segmentation regions resulting from a temporally consistent over-segmentation is retrieved 10. In addition, also a depth map 3 associated to the image is retrieved 11. Then the segmentation regions of the image are projected 12 into the depth map 3 associated to the image. Finally, depth values of the depth map 3 within one or more of the projected segmentation regions are modified 13.

Fig. 4 schematically illustrates an apparatus 20 adapted to implement a solution according to the invention for generating temporally consistent depth maps 4 for a sequence of images. The apparatus 20 has an input 21 for receiving the representation 1 of the image by segmentation regions for the image and a depth map 3 associated to the image, e.g. from a network or a local storage 22. Of course, the representation 1 of the image by segmentation regions as well as the depth map 3 may likewise be generated by dedicated circuitry (not shown) within the apparatus 20. A first retrieving unit 23 retrieves 10 the representation 1 of the image from the sequence of images by segmentation regions. In addition, a second retrieving unit 24 retrieves 11 the depth map 3 associated to the image. A projecting unit 25 then projects 12 the segmentation regions of the image into the depth map 3 associated to the image. Finally, a modifying unit 26 modifies 13 depth values of the depth map 3 within one or more of the projected segmentation regions. The resulting modified depth map 4 is preferably made available for further processing via an output 27. Of course, the different units 23, 24, 25, 26, may likewise be fully or partially combined into a single unit or implemented as software running on a processor. In addition, the input 21 and the output 27 may likewise be combined or partially combined into a single bi-directional interface.

**Claims**

1. A method for generating temporally consistent depth maps (4) for a sequence of images, the method **comprising:**

    - retrieving (10) a representation (1) of an image from the sequence of images by segmentation regions resulting from a temporally consistent over-segmentation;
    - retrieving (11) a depth map (3) associated to the image;
    - projecting (12) the segmentation regions of the image into the depth map (3) associated to the image; and
    - modifying (13) depth values of the depth map (3) within one or more of the projected segmentation regions.

2. The method according to claim 1, **wherein** the depth values are modified (23) by fitting a regression plane to a projected segmentation region and replacing one or more depth values in the projected segmentation region with depth values represented by the regression plane.

3. The method according to claim 2, **wherein** only those depth values are modified (23) in the projected segmentation region, whose distance to the regression plane is larger than a threshold.

4. The method according to claim 2 or 3, **wherein** the regression plane is fitted to the projected segmentation region using a random sample consensus algorithm.

5. The method according to one of claims 2 to 4, **wherein** a quality of a potential regression plane is controlled by a first parameter defining a maximum allowed distance of a depth value from the plane to be considered located in the plane and a second parameter defining the minimal percentage of depth values of the projected segmentation region that are located in the plane or within the allowed distance from the plane.

6. The method according to one of claims 2 to 5, **further** comprising interpolating a missing regression plane for a projected segmentation region of the image from corresponding regression planes of temporally adjacent images.

7. The method according to one of the preceding claims, **wherein** the segmentation regions are superpixels.

8. An apparatus (20) configured to generate temporally consistent depth maps (4) for a sequence of images, the apparatus (20) **comprising:**

    - a first retrieving unit (23) configured to retrieve (10) a representation (1) of an image from the sequence of images by segmentation regions resulting from a temporally consistent over-segmentation;
    - a second retrieving unit (24) configured to retrieve (11) a depth map (3) associated to the image;
    - a projecting unit (25) configured to project (12) the segmentation regions of the image into the depth map (3) associated to the image; and
    - a modifying unit (26) configured to modify (13) depth values of the depth map (3) within one or more of the projected segmentation regions.

9. A computer readable storage medium having stored therein instructions enabling generating temporally consistent depth maps (4) for a sequence of images, which, when executed by a computer, cause the computer to:

    - retrieve (10) a representation (1) of an image from the sequence of images by segmentation regions resulting from a temporally consistent over-segmentation;
    - retrieve (11) a depth map (3) associated to the image;
    - project (12) the segmentation regions of the image into the depth map (3) associated to the image; and
    - modify (13) depth values of the depth map (3) within one or more of the projected segmentation regions.

**Fig. 1**

normal vector
for i-1

Estimated normal
vector for i

Estimated plane for
superpixel j at frame i

normal vector
for i+1

$S_1$

$S_3$

$S_2$

Best fitting regression
plane Z for superpixel j at
frame i-1

Best fitting regression
plane Z for superpixel j at
frame i+1

**Fig. 2**

**Fig. 3**

**Fig. 4**

Europäisches
Patentamt

European
Patent Office

Office européen
des brevets

# EUROPEAN SEARCH REPORT

Application Number

EP 14 18 5806

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/109585 A1 (TAO HAI [US] ET AL) 10 June 2004 (2004-06-10) | 1,2,4-9 | INV.<br>G06T5/00 |
| A | * abstract *<br>* figures 2,6a,6b *<br>* paragraphs [0018], [0020], [0042], [0056], [0058], [0060], [0061], [0065], [0072], [0074], [0076], [0085] * | 3 | G06T7/00 |
| Y | SHENGXIA LIU ET AL: "A phase matching and region segmentation stereo depth mixed extraction algorithm", BROADBAND MULTIMEDIA SYSTEMS AND BROADCASTING (BMSB), 2010 IEEE INTERNATIONAL SYMPOSIUM ON, IEEE, PISCATAWAY, NJ, USA, 24 March 2010 (2010-03-24), pages 1-5, XP031675485, ISBN: 978-1-4244-4461-8<br>* abstract *<br>* sections I, II.A, II.C *<br>* figure 1 * | 1-9 | |
| | | | **TECHNICAL FIELDS SEARCHED (IPC)**<br><br>G06T |
| Y | D-V NGUYEN ET AL: "Fitting plane algorithm-based depth correction for Tyzx DeepSea stereoscopic imaging", COMMUNICATIONS AND ELECTRONICS (ICCE), 2012 FOURTH INTERNATIONAL CONFERENCE ON, IEEE, 1 August 2012 (2012-08-01), pages 291-295, XP032245537, DOI: 10.1109/CCE.2012.6315914 ISBN: 978-1-4673-2492-2<br>* abstract *<br>* figure 1 *<br>* sections I, II, III * | 1-9 | |

-/--

The present search report has been drawn up for all claims

| Place of search | Date of completion of the search | Examiner |
|---|---|---|
| Munich | 12 November 2014 | Eveno, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................
& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 14 18 5806

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Jörn Jachalsky, Wolfram Putzke-Röming, Ingo Feldmann, Johannes Furch, Wolfgang Waizenegger, Jean-Yves Guillemaut, Chris Budd: "D4.2.1 Scene Analysis with Spatio-temporal consistency", <br><br> 6 February 2013 (2013-02-06), XP002720673, Retrieved from the Internet: URL:http://3dsceneoutcomes.files.wordpress.com/2013/06/scene-d4-2-1-final-submit.pdf [retrieved on 2014-02-19] * section 3.1.1 * <br> ----- | 1-9 | |
| A | Anonymous: "RANSAC and some HOUGH transform", <br><br> 18 July 2010 (2010-07-18), XP002720674, Retrieved from the Internet: URL:http://www.docstoc.com/docs/47349086/RANSAC-and-some-HOUGH-transform [retrieved on 2014-02-19] * slide 5 * <br> ----- | 1-9 | |

TECHNICAL FIELDS
SEARCHED    (IPC)

The present search report has been drawn up for all claims

| Place of search | Date of completion of the search | Examiner |
|---|---|---|
| Munich | 12 November 2014 | Eveno, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 14 18 5806

This annex lists the patent family members relating to the patent documents cited in the above-mentioned European search report.
The members are as contained in the European Patent Office EDP file on
The European Patent Office is in no way liable for these particulars which are merely given for the purpose of information.

12-11-2014

| Patent document cited in search report | Publication date | Patent family member(s) | | Publication date |
|---|---|---|---|---|
| US 2004109585 A1 | 10-06-2004 | EP | 1570642 A2 | 07-09-2005 |
| | | JP | 2006509211 A | 16-03-2006 |
| | | US | 2004109585 A1 | 10-06-2004 |
| | | WO | 2004054228 A2 | 24-06-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 13171832 A

**Non-patent literature cited in the description**

• **R. ACHANTA et al.** SLIC Superpixels Compared to State-of-the-Art Superpixel Methods. *IEEE Transactions on Pattern Analysis and Machine Intelligence,* 2012, vol. 43, 2274-2282